# EUROPÄISCHE PATENTSCHRIFT

(11) **EP 2 138 911 B1**
(45) Veröffentlichungstag und Bekanntmachung des Hinweises auf die Patenterteilung: **22.06.2022**
(21) Anmeldenummer: 09168975.2
(22) Anmeldetag: 11.11.2003
(51) Int. Cl.: G03H 1/22, H04N 13/00, G03H 1/08

(54) **Einrichtung zur Rekonstruktion von Videohologrammen**
Device for reconstructing video holograms
Dispositif de reconstruction d'hologrammes video

(30) Priorität: 13.11.2002 DE 10253292
(43) Veröffentlichungstag der Anmeldung: 30.12.2009
(62) Teilanmeldung aus: 03788795.7
(73) Patentinhaber: SeeReal Technologies GmbH, 01099 Dresden (DE)
(72) Erfinder: Schwerdtner, Armin, 01259 Dresden (DE)
(74) Vertreter: Helbig, Nicole

(56) Entgegenhaltungen:
- GB-A- 2 363 273
- US-A- 5 798 864
- TRAVIS L: "The Display of Three-Dimensional Video Images", PROCEEDINGS OF THE IEEE, IEEE. NEW YORK, US, Bd. 85, Nr. 11, 1. November 1997 (1997-11-01), XP011043924, ISSN: 0018-9219, DOI: 10.1109/5.649659
- HIROSHI YOSHIKAWA ET AL: "Full Color Computer-Generated Rainbow Hologram with Enlarged Viewing Angle", OPTICAL REVIEW, SPRINGER, BERLIN, DE, Bd. 9, Nr. 6, 1. November 2002 (2002-11-01), Seiten 251-254, XP019353974, ISSN: 1349-9432, DOI: 10.1007/S10043-002-0251-5
- ST HILAIRE P ET AL: "SYNTHETIC APERTURE HOLOGRAPHY: A NOVEL APPROACH TO THREE-DIMENSIONAL DISPLAYS", JOURNAL OF THE OPTICAL SOCIETY OF AMERICA A, OPTICAL SOCIETY OF AMERICA, US, Bd. 9, Nr. 11, 1. November 1992 (1992-11-01), Seiten 1969-1977, XP000310714, ISSN: 1084-7529
- LESEBERG D: "SIZABLE FRESNEL-TYPE HOLOGRAM GENERATED BY COMPUTER", JOURNAL OF THE OPTICAL SOCIETY OF AMERICA A, OPTICAL SOCIETY OF AMERICA, US, Bd. 6, Nr. 2, 1. Februar 1989 (1989-02-01) , Seiten 229-233, XP000027259, ISSN: 1084-7529
- J. L. JUÁREZ-PÉREZ ET AL: "Nonredundant calculations for creating digital Fresnel holograms", APPLIED OPTICS, Bd. 36, Nr. 29, 10. Oktober 1997 (1997-10-10), Seite 7437, XP55006369, ISSN: 0003-6935, DOI: 10.1364/AO.36.007437
- N. A. DODGSON: "Analysis of the viewing zone of the Cambridge autostereoscopic display", APPLIED OPTICS, Bd. 35, Nr. 10, 1. April 1996 (1996-04-01) , Seite 1705, XP55006144, ISSN: 0003-6935, DOI: 10.1364/AO.35.001705
- TRAVIS A R L: "AUTOSTEREOSCOPIC 3-D DISPLAY", APPLIED OPTICS, OPTICAL SOCIETY OF AMERICA, WASHINGTON, DC; US, Bd. 29, Nr. 29, 10. Oktober 1990 (1990-10-10), Seiten 4341-4343, XP000148722, ISSN: 0003-6935, DOI: 10.1364/AO.29.004341
- M. PARKER GIVENS: "Introduction to Holography", AMERICAN JOURNAL OF PHYSICS, Bd. 35, Nr. 11, 1. November 1967 (1967-11-01), Seiten 1056-1064, XP55006413, DOI: http://dx.doi.org/10.1119/1.1973727
- LUCENTE M ET AL: "RENDERING INTERACTIVE HOLOGRAPHIC IMAGES", COMPUTER GRAPHICS PROCEEDINGS. LOS ANGELES, AUG. 6 - 11, 1995; [COMPUTER GRAPHICS PROCEEDINGS (SIGGRAPH)], NEW YORK, IEEE, US, 6. August 1995 (1995-08-06), Seiten 387-394, XP040080713, ISBN: 978-0-89791-701-8
- JENDRAL A ET AL: "SYNTHETIC NEAR-FIELD HOLOGRAMS WITH LOCALIZED INFORMATION", OPTICS LETTERS, OPTICAL SOCIETY OF AMERICA, US, vol. 20, no. 10, 15 May 1995 (1995-05-15), pages 1204-1206, XP000512203, ISSN: 0146-9592
- LESEBERG D: "COMPUTER-GENERATED THREE-DIMENSIONAL IMAGE HOLOGRAMS", APPLIED OPTICS, OPTICAL SOCIETY OF AMERICA, WASHINGTON, DC; US, vol. 31, no. 2, 10 January 1992 (1992-01-10), pages 223-229, XP000246871, ISSN: 0003-6935, DOI: 10.1364/AO.31.000223

## Beschreibung

Die Erfindung betrifft ein Videohologramm und eine Einrichtung zur Rekonstruktion von Videohologrammen mit einem optischen System, bestehend wenigstens aus einer Lichtquelle, einer Linse und dem Videohologramm aus matrixförmig oder in anderer Weise regulär angeordneten Zellen mit mindestens einer in Amplitude und/oder Phase steuerbaren Öffnung je Zelle sowie einer Betrachterebene am Ort des Lichtquellenbildes.

Es sind Einrichtungen zur Rekonstruktion von Videohologrammen mit akustooptischen Modulatoren (AOM) bekannt (Stephen A. Benton, Joel S. Kollin: Three dimensional display system, US 5,172,251). Diese akustooptischen Modulatoren wandeln elektrische Signale in optische Wellenfronten um, die dann durch Ablenkspiegel zu zweidimensionalen holografischen Flächen innerhalb eines Videoframes zusammengesetzt werden. Die Wellenfronten werden über weitere optische Elemente als eine für den Betrachter sichtbare Szene rekonstruiert. Die verwendeten optischen Mittel, wie Linsen und Ablenkelemente, haben die Ausdehnung der rekonstruierten Szenen und sind mit ihrer großen Bautiefe voluminös und schwer. Sie lassen sich kaum miniaturisieren und sind daher in ihrem Anwendungsbereich beschränkt.

Eine andere Möglichkeit, große Videohologramme zu erzeugen, bietet das sogenannte Tiling-Verfahren mit Computer Generierten Hologrammen (CGH). Nach diesem aus WO 00/75698 A1 und US 6,437,919 B1 bekannten Verfahren werden kleine CGHs mit kleinem Pitch über eine Abbildungsoptik zusammengesetzt. Dafür werden in einem ersten Schritt schnelle Matrizen mit kleinem Pitch (in der Regel EASLM: Elektronisch Adressierbare Spatiale Licht-Modulatoren) mit der nötigen Information beschrieben, auf ein holografisch geeignetes Medium abgebildet und zu einem größeren Videohologramm zusammengesetzt. Das verwendete Medium ist in der Regel ein Optisch Adressierbarer Spatialer Licht-Modulator (OASLM). In einem zweiten Schritt wird das zusammengesetzte Videohologramm mit kohärentem Licht in Transmission oder Reflexion rekonstruiert.

Bei den beispielsweise aus WO 01/95016 A1 oder Fukaya u.a. "Eye-position tracking type electro-holographic display using liquid crystal devices", Proceedings of EOS Topical meeting on Diffractive Optics, 1997, bekannt gewordenen CGH mit matrixförmigen oder auf andere Weise regulär angeordneten steuerbaren Öffnungen wird die Beugung an kleinen

Öffnungen für die Kodierung der Szenen angewendet. Die von den Öffnungen ausgehenden Wellenfronten konvergieren in Objektpunkten der dreidimensionalen Szene, bevor sie den Betrachter erreichen. Je kleiner der Pitch und damit die Größe der Öffnungen in den CGH ist, umso größer ist der Beugungswinkel, also der Betrachterwinkel. Eine Vergrößerung des Betrachterwinkels bedeutet bei diesen bekannten Verfahren daher eine Vergrößerung der Auflösung.

Bei Fourierhologrammen findet bekanntlich die Rekonstruktion in eine Ebene als direkte oder inverse Fouriertransformierte des Hologramms statt. Diese Rekonstruierte setzt sich periodisch mit einem Periodizitätsintervall fort, dessen Ausdehnung umgekehrt proportional zum Pitch im Hologramm ist.

Wenn die Ausdehnung der Rekonstruierten des Fourierhologramms größer als das Periodizitätsintervall ist, überlappen sich benachbarte Beugungsordnungen. Mit zunehmender Verringerung der Auflösung, also wachsendem Pitch der Öffnungen, werden die Ränder der Rekonstruierten durch Überlappung aus den höheren Beugungsordnungen zunehmend gestört. Die nutzbare Rekonstruktion wird dadurch in ihrer Ausdehnung mehr und mehr eingeschränkt.

Will man größere Periodizätsintervalle und damit also größere Betrachterwinkel erzielen, nähert sich der erforderliche Pitch im Hologramm der Lichtwellenlänge. Um dann möglichst große Szenen darstellen zu können, müssen aber auch die CGH entsprechend groß sein. Beide Forderungen verlangen ein großes CGH mit sehr vielen Öffnungen, das in Form von Displays mit steuerbaren Öffnungen gegenwärtig nicht realisierbar ist (s. EP 0 992 163 B1). CGH mit steuerbaren Öffnungen sind daher nur ein oder wenige Zoll groß, wobei die Pitches noch erheblich über 1 µm liegen.

Beide Parameter, Pitch und Hologrammgröße, werden durch das sogenannte Space-Bandwith-Produkt (SBP) als Anzahl der Öffnungen im Hologramm beschrieben. Soll die Rekonstruktion von einem CGH mit steuerbaren Öffnungen mit 50 cm Breite so erfolgen, dass ein Betrachter die Szene im Abstand von 1 m innerhalb eines horizontalen Betrachterfensters von 50 cm sehen kann, beträgt das SPB in horizontaler Richtung etwa 0,5^{∗}10⁶. Dem entsprechen im CGH 500.000 steuerbare Öffnungen mit einem Abstand von 1 µm. Bei einem Aspekt-Verhältnis von 4:3 ergeben sich in vertikaler Richtung entsprechend 375.000 Öffnungen. Das CGH enthält somit 3,75^{∗}10¹¹ Öffnungen, wenn man drei Farbsubpixel berücksichtigt. Diese Zahl verdreifacht sich noch, wenn man bedenkt, dass im CGH mit steuerbaren Öffnungen meist nur Amplituden beeinflusst werden können. Die Phasenkodierung erfolgt dann über den sogenannten Detourphasen-Effekt, wofür mindestens drei äquidistante Öffnungen je Abtastpunkt erforderlich sind. SLM mit so vielen steuerbaren Öffnungen sind derzeit nicht bekannt.

Die Hologrammwerte müssen aus den zu rekonstruierenden Szenen berechnet werden. Bei einer Farbtiefe von 1 Byte für jede der drei Grundfarben und einer Frame-Rate von 50 Hz benötigt ein CGH einen Informationsfluss von 50^{∗}10¹² = 0,5^{∗}10¹⁴ Byte/s. Fouriertransformationen von Datenströmen dieser Größe übersteigen die Leistung derzeit einsetzbarer Rechner bei weitem und schließen eine Hologramm-Berechnung auf Basis lokaler Rechner aus. Aber auch eine Übertragung dieser Informationsmenge über Datennetze ist für den normalen Nutzer gegenwärtig nicht realisierbar.

Um die umfangreichen Rechenvorgänge zu verringern, wird beispielsweise auch vorgeschlagen, das Hologramm nicht vollständig zu berechnen, sondern nur in den Teilen, die direkt vom Betrachter eingesehen werden können oder die sich ändern. In der oben schon genannten Patentschrift WO 01/95016 A1 wird ein solches Hologramm beschrieben, das aus adressierbaren Subregionen besteht, wie etwa das genannte Tiling-Hologramm. Ausgangspunkt der Berechnungen ist eine sogenannte effektive Austrittspupille, die mit der Augenpupille des Betrachters in der jeweiligen Position zusammenfallen kann. Die Nachführung des Bildes bei einer Veränderung der Betrachterposition erfolgt durch ständige Neuberechnung des Hologrammteiles, der das Bild für die neue Betrachterposition erzeugt. Dadurch wird aber die Senkung des Rechenaufwandes zum Teil wieder zunichte gemacht.

Aus dem Übersichtsartikel Travis L.: "The Display of Three-Dimensional Video Images" Proceedings of the IEEE, Bd. 85, Nr. 11, 1. November 1997, Seiten 1817 bis 1832, sind stereoskopische und holographische Anzeigevorrichtungen bekannt.

Aus den Veröffentlichungen Leseberg D.: "Computer-Generated Three-Dimensional Image Holograms", Applied Optics. Bd. 31. Nr. 2. 10. Januar 1992. Seiten 223-229, und Jendral A. et al.: "Synthetic Near-Field Holograms With Localized Information", Optics Letters. Bd. 20, Nr. 10, 15. Mai 1995, Seiten 1204-1206. sind Möglichkeiten beschrieben, den Rechenaufwand für die Hologrammberechnung zu reduzieren, bei der letztgenannten Veröffentlichung für Nahfeldhologramme.

Die Nachteile der bekannten Verfahren bestehen zusammengefasst darin, dass die Anordnungen mit akusto-optischen Modulatoren zu voluminös sind und nicht auf heutige aus der Flachbildschirmtechnik bekannte Abmessungen reduziert werden können, dass die Videohologramme nach dem Tiling-Verfahren zweistufige Verfahren mit großem technologischen Aufwand sind, die sich schwerlich auf Desktop-Größe reduzieren lassen und dass schließlich die Anordnungen auf der Basis von SLM mit steuerbaren Öffnungen zu klein sind, um große Szenen rekonstruieren zu können. Dazu fehlen momentan steuerbare große SLM mit extrem kleinen Pitches sowie die erforderlichen Rechenleistungen und die erforderliche hohe Bandbreite der Netzwerke.

Der Erfindung liegt die Aufgabe zugrunde, die angeführten Nachteile zu umgehen und ausgedehnte Videodarstellungen von Hologrammen in Echtzeit und für große Betrachterwinkel zu ermöglichen.

Diese Aufgabe wird erfindungsgemäß mit den in den Patentansprüchen 1 und 13 jeweils aufgeführten Merkmalen gelöst. Vorteilhafte Ausgestaltungen der Erfindung sind in den abhängigen Patentansprüchen angegeben.

Die erfindungsgemäßen Videohologramme und Einrichtungen zur Rekonstruktion von Videohologrammen mit steuerbaren Öffnungen sehen vor, dass in der Betrachterebene mindestens ein Betrachterfenster in einem Periodizitätsintervall als direkte oder inverse Fouriertransformierte des Videohologramms gebildet wird, durch das hindurch ein Betrachter eine dreidimensionale Szene als Rekonstruktion sehen kann. Die Ausdehnung des Betrachterfensters entspricht maximal dem Periodizitätsintervall in der Ebene der Fourier-Rücktransformation am Ort des Lichtquellenbildes. Das Betrachterfenster spannt zusammen mit dem Hologramm einen Kegelstumpf auf, der die gesamte dreidimensionale Szene als Fresnel-Transformierte des Videohologramms enthält.

Das Betrachterfenster ist in Ausbildung der Erfindung in etwa auf ein Auge, einen Augenabstand eines Betrachters oder auf einen anderen geeigneten Bereich begrenzt und positioniert.

Im Rahmen der Erfindung ist vorgesehen, dass dem anderen Auge des Betrachters analog ein Betrachterfenster zugeordnet wird. Das erfolgt dadurch, dass die betrachtete Lichtquelle entsprechend versetzt oder durch Zuschalten einer zweiten reellen oder virtuellen, hinreichend kohärenten Lichtquelle an einem anderen geeigneten Ort zu einem Lichtquellenpaar im optischen System ergänzt wird. Auf diese Weise wird die beidäugige Betrachtung der dreidimensionalen Szene durch zwei zugehörige Betrachterfenster ermöglicht. Dabei kann der Inhalt des Videohologramms synchron mit dem Zuschalten des zweiten Betrachterfensters entsprechend der Augenposition geändert, d.h. umkodiert werden. Bei mehreren Betrachtern können so durch Zuschalten weiterer Lichtquellen entsprechend viele Betrachterfenster erzeugt werden.

Für die Einrichtung zur Rekonstruktion eines Videohologramms besteht ein anderer wesentlicher Erfindungsgedanke darin, das optische System und das Videohologramm so anzuordnen, dass die höheren Beugungsordnungen des Videohologramms für das erste Betrachterfenster eine Nullstelle bzw. ein Intensitätsminimum am Ort des zweiten Betrachterfensters aufweisen. Damit wird ein Übersprechen eines Betrachterfensters für ein Auge auf das andere Auge eines Betrachters oder auf andere Betrachter verhindert. Der Intensitätsabfall des Lichts zu höheren Beugungsordnungen hin aufgrund der endlichen Breite der Öffnungen des Videohologramms oder/und der Minima des Intensitätsverlaufs wird so vorteilhaft ausgenutzt. Bei zum Beispiel rechteckigen Öffnungen entsteht als Intensitätsverlauf eine sinc²-Funktion, die schnell abfällt und eine mit größer werdenden Abständen abnehmende sin²-Funktion darstellt.

Für das Videohologramm sind nur so viele Werte zu berechnen, wie das Display Öffnungen hat. Auf die gleiche Anzahl von Werten ist die Übertragung der Daten vom Computer oder vom Netz auf das Display als Hologramm beschränkt. Der Datenstrom unterscheidet sich daher praktisch nicht von dem heute schon durch die übliche Displaytechnik zu verarbeitenden Datenstrom. Das soll anhand eines Beispiels verdeutlicht werden.

Reduziert man das Betrachterfenster durch Wahl eines hinreichend grob auflösenden Displays beispielsweise von horizontal 50 cm und vertikal 37,5 cm auf 1 cm x 1 cm, so entspricht das einer Reduzierung der Anzahl der Öffnungen im Hologramm auf 1/1875. In gleicher Weise wird bei einem Transfer über ein Netzwerk die erforderliche Bandbreite reduziert. Bei den nach bekannten Verfahren hergestellten Videohologrammen mit erforderlichen 10¹² Öffnungen reduzieren sich diese im Beispiel auf etwa 5^{∗}10⁸ Pixel. Durch das verbleibende Betrachterfenster kann die Szene vollständig betrachtet werden. Diese Anforderungen an Pitch und Hologrammgrösse entsprechend dem Space-Bandwith-Produkt können heute verfügbare Displays bereits erfüllen. Damit können auf kostengünstige Weise große Echtzeit-Videohologramme auf Displays mit großem Pitch für einen großen Betrachterbereich realisiert werden.

Die Nachführung des Betrachterfensters (Tracking) wird durch mechanischen oder elektronischen Versatz der Lichtquellen, durch bewegliche Spiegel oder von auf andere geeignete Weise positionierbare Lichtquellen realisiert. Mit dem Verschieben der Lichtquellenbilder verschieben sich auch die Betrachterfenster. Bewegt sich der Betrachter, wird/werden die Lichtquelle/n so im Raum verschoben, dass die Betrachterfenster den Augen des Betrachters folgen. Dadurch wird gesichert, dass die Betrachter auch bei Bewegung die rekonstruierte dreidimensionale Szene sehen und andererseits ihre Bewegungsfreiheit nicht eingeschränkt ist. Für die Positionsdetektion der Betrachter sind verschiedene Systeme bekannt, die hier vorteilhaft einsetzbar sind, beispielsweise auf Magnetsensoren basierende.

Mit den erfindungsgemäßen Mitteln ist auch die farbige Rekonstruktion eines Videohologramms effektiv möglich. Dabei ist vorgesehen, dass die Rekonstruktion mit mindestens drei für die Grundfarben in Amplitude und/oder Phase steuerbaren Öffnungen je Zelle erfolgt, wobei die Kodierung für die Öffnungen für jede Grundfarbe separat vorgenommen wird. Eine andere Möglichkeit der farbigen Rekonstruktion eines Videohologramms besteht darin, wenigstens drei nacheinander ausgeführte Rekonstruktionen in den Grundfarben auf der Grundlage der erfindungsgemäßen Einrichtung durchzuführen.

Mit der vorliegenden Erfindung können vorteilhafterweise holografische Darstellungen von ausgedehnten räumlichen Szenen mittels steuerbarer Displays, wie TFT-Flachdisplays, in Echtzeit und für große Betrachterwinkel erzeugt werden. Diese Videohologramme sind vorteilhafterweise im Fernseh-, Multimedia-, Spiele- und Konstruktionsbereich, in der Militär- und in der Medizintechnik und in anderen Bereichen von Wirtschaft und Gesellschaft anwendbar. Die dreidimensionalen Szenen können computergeneriert oder auf andere Weise erzeugt werden.

Ein Ausführungsbeispiel der Erfindung ist in den Zeichnungen dargestellt und wird im Folgenden näher beschrieben.

Es zeigen
- Fig. 1: eine prinzipielle Darstellung eines Videohologramms und einer Einrichtung zur Rekonstruktion von Videohologrammen mit der Entstehung der Beugungsordnungen und der Lage eines Betrachterfensters,
- Fig. 2: eine prinzipielle Darstellung einer Einrichtung zur Rekonstruktion von Videohologrammen mit einer dreidimensionalen Szene, die durch ein Betrachterfenster hindurch betrachtet werden kann,
- Fig. 3: eine prinzipielle Darstellung einer Einrichtung zur Rekonstruktion von Videohologrammen mit der Kodierung der dreidimensionalen Szene in einem Teil des Videohologramms, so dass die Beugungsordnungen nicht überlappen,
- Fig. 4: einen Intensitätsverlauf des Lichtes in der Betrachterebene in Abhängigkeit von den Beugungsordnungen und
- Fig. 5: eine prinzipielle Darstellung einer Einrichtung zur Rekonstruktion von Videohologrammen mit der Lage der Betrachterfenster für beide Augen eines Betrachters hinsichtlich der Beugungsordnungen zur Vermeidung von Übersprechen.

Eine Einrichtung zur Rekonstruktion von Videohologrammen besteht aus dem Videohologramm, einer hinreichend kohärenten reellen oder virtuellen punkt- oder linienförmigen Lichtquelle und aus einem optischen System. Das Videohologramm selbst setzt sich aus matrixförmig oder in anderer Weise regulär angeordneten Zellen zusammen, die mindestens eine in Amplitude und/oder Phase steuerbare Öffnung je Zelle enthalten. Das optische System zur Rekonstruktion des Videohologramms lässt sich in bekannter Weise z.B. einfach durch ein optisches Abbildungssystem, bestehend aus einem punkt- oder linienförmigen Laser und einer hinreichend kohärenten Lichtquelle realisieren.

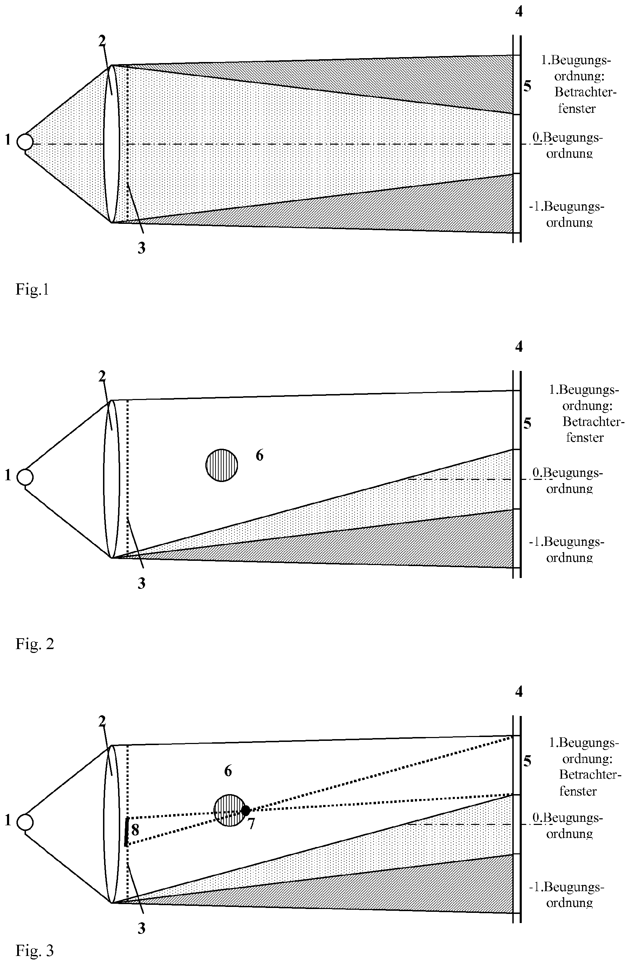

Die grundsätzliche Anordnung von Videohologramm und Rekonstruktion zeigt Fig. 1. In Lichtrichtung sind hintereinander eine Lichtquelle 1, eine Linse 2, ein Hologramm 3 und eine Betrachterebene 4 angeordnet. Der Betrachterebene 4 entspricht die Fourierebene der Rücktransformation des Videohologramms mit den Beugungsordnungen.

Die Lichtquelle 1 wird durch ein optisches System, repräsentiert durch die Linse 2, in die Betrachterebene 4 abgebildet. Setzt man ein Hologramm 3 ein, so wird es in der Betrachterebene 4 als Fourier-Rücktransformation dargestellt. Das Hologramm 3 mit periodischen Öffnungen erzeugt äquidistant fortgesetzte Beugungsordnungen in der Betrachterebene 4, wobei die holografische Kodierung, beispielsweise mittels des sogenannten Detourphasen-Effektes, in die höheren Beugungsordnungen erfolgt. Da die Intensität nach höheren Beugungsordnungen hin abnimmt, wird in der Regel die 1. oder die -1. Beugungsordnung als Betrachterfenster 5 gewählt. Wenn nicht ausdrücklich anders angegeben, wird zur Darlegung der Erfindung im Weiteren von der 1. Beugungsordnung ausgegangen.

Die Ausdehnung der Rekonstruktion wurde hier so gewählt, dass sie in ihrer Größe mit dem Periodizitätsintervall der 1. Beugungsordnung in der Betrachterebene 4 übereinstimmt. Somit schließen sich höhere Beugungsordnungen ohne Lücke, aber auch ohne Überlappung aneinander an.

Die ausgewählte 1. Beugungsordnung bildet zwar als Fouriertransformierte die Rekonstruierte des Hologramms 3, stellt aber nicht die eigentliche dreidimensionale Szene 6 dar. Sie dient nur als Betrachterfenster 5, durch das hindurch die dreidimensionale Szene 6 betrachtet werden kann (s. Fig. 2). Im Inneren des Lichtbündels der 1. Beugungsordnung ist die eigentliche dreidimensionale Szene 6 in Form eines Kreises angedeutet. Die Szene liegt also innerhalb des Rekonstruktionskegels, der vom Hologramm 3 und dem Betrachterfenster 5 aufgespannt wird. Die Szene entsteht als Fresnel-Transformierte des Hologramms, während das Betrachterfenster ein Teil der Fourier-Transformierten ist.

Die Fig. 3 zeigt dazu die holografische Kodierung. Die dreidimensionale Szene ist aus Punkten aufgebaut. Mit dem Betrachterfenster 5 als Basis und dem ausgewählten Punkt 7 in der Szene 6 als Spitze wird ein Kegel durch diesen Punkt hindurch verlängert auf das Hologramm 3 projiziert. Es entsteht ein Projektionsgebiet 8 im Videohologramm 3, in dem dieser Punkt holografisch kodiert wird. Zur Berechnung der Phasenwerte kann man die Weglängen vom betrachteten Punkt 7 zu den Zellen des Hologramms 3 bestimmen. Mit dieser Rekonstruktion wird die Größe des Betrachterfensters 5 im Periodizitätsintervall eingehalten. Würde im Beispiel dagegen der betrachtete Punkt 7 im gesamten Hologramm 3 kodiert, wäre die Rekonstruierte über das Periodizitätsintervall hinaus ausgedehnt. Die Betrachterzonen aus benachbarten Beugungsordnungen würden sich überlappen, wobei der Betrachter eine periodische Fortsetzung des betrachteten Punktes 7 sehen würde. Eine so kodierte Oberfläche würde durch Mehrfachüberlagerungen in ihren Konturen verwaschen erscheinen.

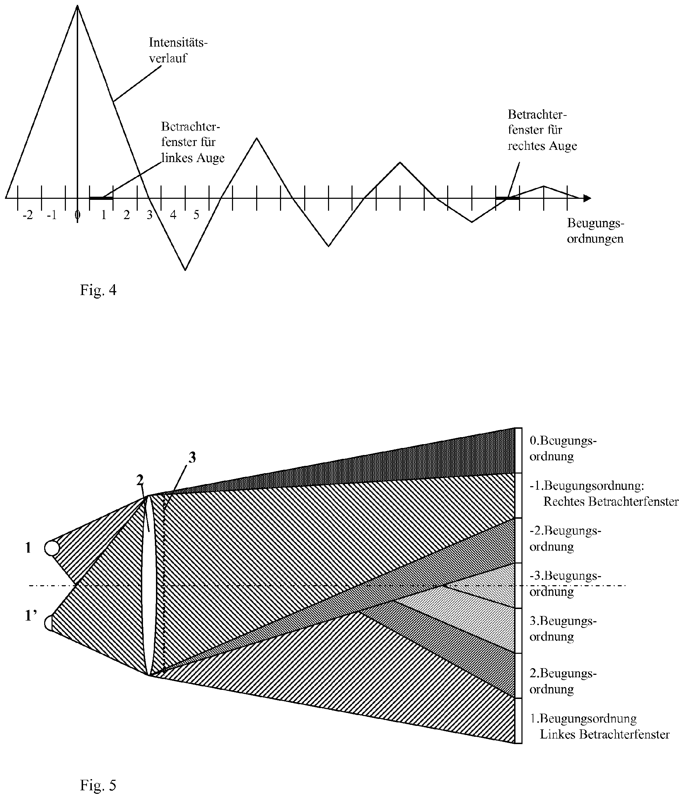

Vorteilhafterweise wird der Intensitätsabfall zu höheren Beugungsordnungen hin zur Unterdrückung des Übersprechens auf andere Betrachterfenster genutzt. Die Fig. 4 zeigt dazu schematisch einen Intensitätsverlauf des Lichts über die Beugungsordnungen, der durch die Breite der Öffnungen im CGH entsteht. Auf der Abszisse sind die Beugungsordnungen aufgetragen. Die 1. Beugungsordnung stellt das Betrachterfenster 5 für das linke Auge, also das linke Betrachterfenster, dar, durch das die dreidimensionale Szene 6 betrachtet werden kann. Das Übersprechen in ein Betrachterfenster für das rechte Auge wird durch den Abfall der Intensität zu höheren Ordnungen und zusätzlich noch durch die Nullstelle der Intensitätsverteilung unterdrückt.

Der Betrachter kann die Szene 6 des Hologramms 3 natürlich auch mit beiden Augen betrachten (s. Fig. 5). Für das rechte Auge wurde als rechtes Betrachterfenster 5' die -1. Beugungsordnung zur Lichtquelle 1' gewählt. Wie aus der Zeichnung ersichtlich ist, spricht diese Intensität nur mit einem sehr geringen Wert auf das linke Auge über. Er entspricht hier der -6. Beugungsordnung.

Für das linke Auge wurde die 1. Beugungsordnung entsprechend der Lage der Lichtquelle l gewählt. Dort entsteht analog das linke Betrachtungsfenster 5. Erfindungsgemäß werden mit den zwei Lichtquellen l und l' die entsprechenden dreidimensionalen Szenen 6 und 6' (hier nicht gezeigt) ortsfest bezüglich der Augen dargestellt. Dazu wird das Hologramm 3 beim Zuschalten der Lichtquellen 1 und l' jeweils neu kodiert. Alternativ können die beiden Lichtquellen 1 und l' gleichzeitig das Hologramm 3 an den beiden Betrachterfenstern 5 und 5' rekonstruieren.

Bewegt sich der Betrachter, werden die Lichtquellen l und l' so nachgeführt, dass die beiden Betrachterfenster 5 und 5' auf den Augen des Betrachters lokalisiert bleiben. Dies gilt auch bei Bewegungen in der Normalen, also senkrecht zum Videohologramm.

Weiterhin können auch mehrere Betrachter eine dreidimensionale Szene betrachten, indem durch Zuschalten weiterer Lichtquellen zusätzliche Betrachterfenster entstehen.

Die vorliegende Beschreibung und die Fig. offenbaren u.a. ein Videohologramm und eine Einrichtung zur Rekonstruktion von Videohologrammen mit einem optischen System, bestehend aus mindestens einer reellen oder virtuellen punkt- und/oder linienförmigen, hinreichend kohärenten Lichtquelle und einer Linse, sowie dem Videohologramm aus matrixförmig oder in anderer Weise regulär angeordneten Zellen mit mindestens einer in Amplitude und/oder Phase steuerbaren Öffnung je Zelle und einer Betrachterebene am Ort des Lichtquellenbildes. In der Betrachterebene ist ein Betrachterfenster 5 in einem Periodizitätsintervall der Rekonstruktion als Fouriertransformierte des Videohologramms 3 lokalisiert, durch welches hindurch eine dreidimensionale Szene 6 betrachtbar ist. Die Ausdehnung des Betrachterfensters 5 ist nicht größer als das Periodizitätsintervall.

Das Betrachterfenster 5 könnte in etwa auf ein Auge, einen Augenabstand eines Betrachters oder auf einen anderen geeigneten Bereich begrenzt und positioniert sein.

Dem anderen Auge des Betrachters ist ein zweites Betrachterfenster 5' durch Zuschalten einer zweiten reellen oder virtuellen, hinreichend kohärenten Lichtquelle l' an einem anderen geeigneten Ort zu einem Lichtquellenpaar im optischen System zugeordnet.

Das optische System und das Videohologramm 3 sind so angeordnet, dass die höheren Beugungsordnungen des Videohologramms 3 für das erste Betrachterfenster 5 eine Nullstelle bzw. ein Intensitätsminimum am Ort des zweiten Betrachterfensters 5' aufweisen.

Synchron mit dem Zuschalten des zweiten Betrachterfensters 5' ist das Videohologramm 3 für das zweite Auge umkodierbar.

Für mehrere Betrachter sind mehrere Lichtquellen zuschaltbar.

Die Lichtquellen sind durch mechanischen oder elektronischen Versatz, durch bewegliche Spiegel, oder auf andere geeignete Weise positionierbar.

Die Information zur Bestimmung der Position der Lichtquellen wird von wenigstens einem Positionsgeber in Abhängigkeit von der Position des oder der Betrachter geliefert.

Die farbige Rekonstruktion eines Videohologramms 3 aus matrixförmig oder regulär angeordneten Zellen erfolgt mit mindestens drei für die Grundfarben in Amplitude und/oder Phase steuerbaren Öffnungen je Zelle, wobei die Kodierung für die Öffnungen für jede Grundfarbe separat erfolgt.

Die farbige Rekonstruktion erfolgt durch wenigstens drei nacheinander ausgeführte Rekonstruktionen in den Grundfarben.

Zusammenfassend wird ausgeführt, dass die Erfindung Videohologramme und Einrichtungen zur Rekonstruktion von Videohologrammen mit einem optischen System betrifft, bestehend aus Lichtquelle 1, Linse 2 und dem Videohologramm 3 aus matrixförmig oder regulär angeordneten Zellen mit mindestens einer in Amplitude und/oder Phase steuerbaren Öffnung je Zelle. Die Videohologramme und Einrichtungen zur Rekonstruktion derselben zeichnen sich dadurch aus, dass holografische Videodarstellungen ausgedehnter räumlicher Objekte 6 in einem weiten Betrachterbereich mittels steuerbarer Displays in Echtzeit realisierbar sind, wobei die Objekte entweder computergeneriert oder auf andere Weise erzeugt werden. Das Space-Bandwith-Produkt (SBP) des Hologramms wird dabei auf ein Minimum reduziert, indem das Periodizitätsintervall des Fourierspektrums in der Rücktransformationsebene als Betrachterfenster 5 genutzt wird, durch welches das Objekt im davorliegenden Raum sichtbar wird. Die Beweglichkeit des/der Betrachter wird durch Nachführen des Betrachterfensters erreicht. Vorteilhafte Anwendungen bieten sich im Fernseh-, Multimedia-, Spiele- und Konstruktionsbereich, in der Militär- und Medizintechnik sowie in anderen Bereichen von Wirtschaft und Gesellschaft.

## Patentansprüche

1. Einrichtung zur Rekonstruktion einer aus einzelnen Punkten aufgebauten dreidimensionalen Szene mit einem optischen System, enthaltend mindestens eine reelle punkt- oder linienförmige, hinreichend kohärente Lichtquelle (1) und eine Linse (2), sowie mit einem steuerbaren Display (3) aus matrixförmig oder in anderer Weise regulär angeordneten Zellen mit mindestens einer in Amplitude und/oder Phase steuerbaren Öffnung je Zelle, wobei in Lichtrichtung hintereinander die Lichtquelle (1), die Linse (2), und das steuerbare Display (3) angeordnet sind, wobei die Einrichtung ausgebildet ist, in das steuerbare Display (3) ein Videohologramm zu kodieren und wobei die Linse (2) ein Bild der Lichtquelle (1) in der Ebene der Fourier-Rücktransformation des Videohologramms am Ort des Lichtquellenbildes erzeugt, **dadurch gekennzeichnet, dass** ein Betrachterfenster (5) in einer Betrachterebene (4) der Ebene der Fourier-Rücktransformation des Videohologramms am Ort des Lichtquellenbildes entspricht, innerhalb einer Beugungsordnung des in das steuerbaren Displays (3) kodierten Videohologramms positioniert ist, dass durch das Betrachterfenster (5) hindurch die dreidimensionale Szene (6) betrachtbar ist, wenn ein Auge eines Betrachters an dem Betrachterfenster (5) positioniert ist, dass ein Computer der Einrichtung ausgebildet ist, ein Projektionsgebiet (8) mittels einer Projektion vom Betrachterfenster (5) als Basis durch einen ausgewählten Punkt (7) der dreidimensionalen Szene (6) hindurch zum steuerbaren Display (3) zu bilden, das Videohologramm in dem Projektionsgebiet (8) des steuerbaren Displays (3) zur Darstellung des ausgewählten Punkts (7) zu kodieren, und dass dieses Projektionsgebiet (8) das einzige Gebiet ist, in welchem das Videohologramm für den ausgewählten Punkt (7) kodiert ist.

2. Einrichtung nach Patentanspruch 1, **dadurch gekennzeichnet, dass** die Einrichtung ausgebildet ist, die holografische Rekonstruktion der dreidimensionalen Szene durch eine Fresneltransformation zu erzeugen, während das Betrachterfenster (5) ein Teil der Fouriertransformation ist.

3. Einrichtung nach Patentanspruch 2, **dadurch gekennzeichnet, dass** die Einrichtung ausgebildet ist, eine direkte oder inverse Fouriertransformation des Videohologramms mit dem steuerbaren Display (3) in der Betrachterebene (4) zu erzeugen.

4. Einrichtung nach Patentanspruch 1, **dadurch gekennzeichnet, dass** das Betrachterfenster (5) in etwa auf ein Auge eines Betrachters begrenzt und positioniert ist oder dass die Größe des Betrachterfensters (5) kleiner als die Größe des steuerbaren Displays (3) ist oder dass ein Betrachterfenster (5) etwa 1 cm x 1 cm groß ist.

5. Einrichtung nach Patentanspruch 1, **dadurch gekennzeichnet, dass** die Einrichtung ausgebildet ist, für das andere Auge des Betrachters ein zweites Betrachterfenster (5') in der Betrachterebene (4) durch ein Versetzen der Lichtquelle (1) zu erzeugen.

6. Einrichtung nach Patentanspruch 1, **dadurch gekennzeichnet, dass** ein zweites Betrachterfenster (5') erzeugt wird, indem eine zweite reelle, hinreichend kohärente Lichtquelle (1') an einem anderen geeigneten Ort zu einem Lichtquellenpaar (1, 1') im optischen System zugeschaltet wird.

7. Einrichtung nach Patentanspruch 5 oder 6, **dadurch gekennzeichnet, dass** die Position des Betrachterfensters (5, 5') änderbar ist und dass das Betrachterfenster (5, 5') dem Auge des Betrachters so nachführbar ist, dass der Betrachter auch beim Bewegen seines Kopfes weiterhin durch das Betrachterfenster (5, 5') blicken kann.

8. Einrichtung nach Patentanspruch 7, **dadurch gekennzeichnet, dass** ein Nachführen der Positionen von Betrachterfenstern (5, 5'), welche auf die Augen des Betrachters positioniert sind, durch mechanisches oder elektronisches Verschieben der mindestens einen Lichtquelle (1, 1') mit einem Mittel zum Nachführen erfolgt.

9. Einrichtung nach einem der Patentansprüche 5 bis 7, **dadurch gekennzeichnet, dass** die mindestens eine Lichtquelle durch mechanischen oder elektronischen Versatz oder durch bewegliche Spiegel positionierbar ist.

10. Einrichtung nach einem der Patentansprüche 5 bis 9, **gekennzeichnet durch** wenigstens einen Positionsgeber, der eine Information zur Bestimmung der Position der mindestens einen Lichtquelle in Abhängigkeit von der Position des Betrachters oder der Betrachter liefert.

11. Einrichtung nach Patentanspruch 1, **dadurch gekennzeichnet, dass** für mehrere Betrachter mehrere Lichtquellen zuschaltbar sind oder dass das steuerbare Display (3) ein TFT-Display ist.

12. Einrichtung nach Patentanspruch 1, **dadurch gekennzeichnet, dass** eine farbige Rekonstruktion durch wenigstens drei nacheinander ausgeführte Rekonstruktionen in den Grundfarben erfolgt oder dass eine farbige Rekonstruktion eines Videohologramms mit einem steuerbaren Display (3) aus matrixförmig oder regulär angeordneten Zellen mit mindestens drei für die Grundfarben in Amplitude und/oder Phase steuerbaren Öffnungen je Zelle erfolgt, wobei die Kodierung für die Öffnungen für jede Grundfarbe separat erfolgt.

13. Verfahren zur Rekonstruktion einer aus einzelnen Punkten aufgebauten dreidimensionalen Szene (6) zum Betreiben einer Einrichtung, wobei die Einrichtung ein optisches System, enthaltend mindestens eine reelle punkt- oder linienförmige, hinreichend kohärente Lichtquelle (1) und eine Linse (2), sowie ein steuerbares Display (3) aus matrixförmig oder in anderer Weise regulär angeordneten Zellen mit mindestens einer in Amplitude und/oder Phase steuerbaren Öffnung je Zelle enthält, wobei in Lichtrichtung hintereinander die Lichtquelle (1), die Linse (2), und das steuerbare Display (3) angeordnet sind, wobei in das steuerbare Display (3) ein Videohologramm kodiert wird und wobei die Linse (2) ein Bild der Lichtquelle (1) in der Ebene der Fourier-Rücktransformation des Videohologramms in einer Betrachterebene (4) am Ort des Lichtquellenbildes erzeugt, **dadurch gekennzeichnet, dass** ein Betrachterfenster (5) in einer Betrachterebene (4), die der Ebene der Fourier-Rücktransformation des Videohologramms am Ort des Lichtquellenbildes entspricht, innerhalb einer Beugungsordnung des in das steuerbare Displays (3) kodierten Videohologramms positioniert ist, dass durch das Betrachterfenster (5) hindurch die dreidimensionale Szene (6) betrachtbar ist, wenn ein Auge eines Betrachters an dem Betrachterfenster (5) positioniert ist, dass ein Projektionsgebiet (8) mittels einer Projektion vom Betrachterfenster (5) als Basis durch einen ausgewählten Punkt (7) der dreidimensionalen Szene (6) hindurch zum steuerbaren Display (3) gebildet wird, dass das Videohologramm in dem Projektionsgebiet (8) des steuerbaren Displays (3) kodiert wird und dass dieses Projektionsgebiet (8) das einzige Gebiet ist, in welchem das Videohologramm für den ausgewählten Punkt (7) kodiert ist.

14. Verfahren nach Anspruch 13 zum Betreiben einer Einrichtung nach einem der Ansprüche 1 bis 12.

## Claims

1. Device for reconstructing a three-dimensional scene built from individual points with an optical system, comprising at least one real point-shaped or line-shaped, sufficiently coherent light source (1) and a lens (2), and with a controllable display (3) made of matrix-type cells or cells of another regular arrangement with at least one opening per cell, said opening being controllable in amplitude and/or phase, wherein, in the light direction, the light source (1), the lens (2) and the controllable display (3) are arranged in succession, wherein the device is adapted to code a video hologram into the controllable display (3) and wherein the lens (2) generates an image of the light source (1) in the plane of the Fourier back transform of the video hologram at the location of the light source image, **characterized in that** a viewer window (5) is positioned in a viewer plane (4), which corresponds to the plane of the Fourier back transform of the video hologram at the location of the light source image, within a diffraction order of the video hologram coded into the controllable display (3), **in that** the three-dimensional scene (6) is viewable through the viewer window (5) if an eye of a viewer is positioned at the viewer window (5), **in that** a computer of the device is configured to form a projection region (8) using a projection from the viewer window (5) as a base through a selected point (7) of the three-dimensional scene (6) to the controllable display (3), to code the video hologram in the projection region (8) of the controllable display (3) for displaying the selected point (7), and **in that** this projection region (8) is the only region in which the video hologram is coded for the selected point (7).

2. Device according to Claim 1, **characterized in that** the device is adapted to generate the holographic reconstruction of the three-dimensional scene through a Fresnel transform, while the viewer window (5) is part of the Fourier transform.

3. Device according to Claim 2, **characterized in that** the device is adapted to generate a direct or inverse Fourier transform of the video hologram with the controllable display (3) in the viewer plane (4).

4. Device according to Claim 1, **characterized in that** the viewer window (5) is approximately limited and positioned to an eye of a viewer or **in that** the size of the viewer window (5) is smaller than the size of the controllable display (3) or **in that** the size of a viewer window (5) is approximately 1 cm x 1 cm.

5. Device according to Claim 1, **characterized in that** the device is adapted to generate a second viewer window (5') in the viewer plane (4) for the other eye of the viewer by moving the light source (1).

6. Device according to Claim 1, **characterized in that** a second viewer window (5') is generated by turning on a second real, sufficiently coherent light source (1') at a different suitable location to form a light source pair (1, 1') in the optical system.

7. Device according to Claim 5 or 6, **characterized in that** the position of the viewer window (5, 5') is variable and **in that** the viewer window (5, 5') is trackable to the eye of the viewer such that the viewer can continue to look through the viewer window (5, 5') even when moving his head.

8. Device according to Claim 7, **characterized in that** a tracking of the positions of viewer windows (5, 5') which are positioned to the eyes of the viewer is achieved by mechanically or electronically displacing the at least one light source (1, 1') using a means for tracking.

9. Device according to one of Claims 5 to 7, **characterized in that** the at least one light source is positionable by way of mechanical or electronic displacement or by movable mirrors.

10. Device according to one of Claims 5 to 9, **characterized by** at least one position encoder, which provides a piece of information for the determination of the position of the at least one light source in dependence on the position of the viewer or of the viewers.

11. Device according to Claim 1, **characterized in that** a plurality of light sources can be turned on for a plurality of viewers or **in that** the controllable display (3) is a TFT display.

12. Device according to Claim 1, **characterized in that** a coloured reconstruction is effected by at least three successively performed reconstructions in the primary colours or **in that** a coloured reconstruction of a video hologram is effected with a controllable display (3) made of matrix-type cells or cells of a regular arrangement with at least three openings per cell, said openings being controllable for the primary colours in amplitude and/or phase, wherein the coding for the openings is done separately for each primary colour.

13. Method for reconstructing a three-dimensional scene (6) built from individual points for operating a device, wherein the device comprises an optical system, comprising at least one real point-shaped or line-shaped, sufficiently coherent light source (1) and a lens (2), and a controllable display (3) made of matrix-type cells or cells of another regular arrangement with at least one opening per cell, said opening being controllable in amplitude and/or phase, wherein, in the light direction, the light source (1), the lens (2) and the controllable display (3) are arranged in succession, wherein a video hologram is coded into the controllable display (3) and wherein the lens (2) generates an image of the light source (1) in the plane of the Fourier back transform of the video hologram at the location of the light source image, **characterized in that** a viewer window (5) is positioned in a viewer plane (4), which corresponds to the plane of the Fourier back transform of the video hologram at the location of the light source image, within a diffraction order of the video hologram coded into the controllable display (3), **in that** the three-dimensional scene (6) is viewable through the viewer window (5) if an eye of a viewer is positioned at the viewer window (5), **in that** a projection region (8) is formed using a projection from the viewer window (5) as a base through a selected point (7) of the three-dimensional scene (6) to the controllable display (3), **in that** the video hologram is coded in the projection region (8) of the controllable display (3), and **in that** this projection region (8) is the only region in which the video hologram is coded for the selected point (7).

14. Method according to Claim 13 for operating a device according to one of Claims 1 to 12.

## Revendications

1. Dispositif de reconstruction d'une scène tridimensionnelle avec un système optique, contenant au moins une source de lumière (1) suffisamment cohérente réelle de forme ponctuelle ou linéaire et une lentille (2), ainsi qu'un afficheur commandable (3) constitué de cellules matricielles ou distribuées régulièrement d'une autre manière avec au moins une ouverture commandable en amplitude et/ou en phase par cellule, la source de lumière (1), la lentille (2) et l'afficheur commandable (3) étant disposés les uns derrière les autres dans la direction de la lumière, le dispositif étant configuré pour coder un hologramme vidéo dans l'afficheur commandable (3) et la lentille (2) générant une image de la source de lumière (1) dans le plan de la transformée inverse de Fourier de l'hologramme vidéo à l'endroit de l'image de la source de lumière, **caractérisé en ce qu'**une fenêtre d'observateur (5) dans le plan d'observateur (4), qui correspond au plan de la transformée inverse de Fourier de l'hologramme vidéo à l'endroit de l'image de la source de lumière, est positionnée à l'intérieur d'un ordre de diffraction de l'hologramme vidéo codé dans l'afficheur commandable (3), **en ce que** la scène tridimensionnelle (6) peut être observée à travers la fenêtre d'observateur (5) lorsqu'un œil d'un observateur est positionné au niveau de la fenêtre d'observateur (5), **en ce qu'**un ordinateur du dispositif est configuré pour former une région de projection (8) au moyen d'une projection vers l'afficheur commandable (3) de fenêtres d'observateur (5) en tant que base à travers un point sélectionné (7) de la scène tridimensionnelle (6), pour coder l'hologramme vidéo dans la région de projection (8) de l'afficheur commandable (3) en vue de la représentation du point sélectionné (7) et **en ce que** cette région de projection (8) est l'unique région dans laquelle l'hologramme vidéo est codé pour le point sélectionné (7).

2. Dispositif selon la revendication 1, **caractérisé en ce que** le dispositif est configuré pour générer la reconstruction holographique de la scène tridimensionnelle par une transformée de Fresnel, tandis que la fenêtre de l'observateur (5) est une partie de la transformée de Fourier.

3. Dispositif selon la revendication 2, **caractérisé en ce que** le dispositif est configuré pour générer une transformée de Fourier directe ou inverse de l'hologramme vidéo avec l'afficheur commandable (3) dans le plan d'observateur (4).

4. Dispositif selon la revendication 1, **caractérisé en ce que** la fenêtre d'observateur (5) est limitée et positionnée approximativement sur un œil d'un observateur ou **en ce que** la taille de la fenêtre d'observateur (5) est plus petite que la taille de l'afficheur commandable (3) ou **en ce qu'**une fenêtre d'observateur (5) a une taille d'environ 1 cm x 1 cm.

5. Dispositif selon la revendication 1, **caractérisé en ce que** le dispositif est configuré pour générer, pour l'autre œil de l'observateur, une deuxième fenêtre d'observateur (5') dans le plan d'observateur (4) par un décalage de la source de lumière (1).

6. Dispositif selon la revendication 1, **caractérisé en ce qu'**une deuxième fenêtre d'observateur (5') est générée en mettant en circuit dans le système optique une deuxième source de lumière (1') suffisamment cohérente réelle à un autre endroit approprié pour former une paire de sources de lumière (1, 1').

7. Dispositif selon la revendication 5 ou 6, **caractérisé en ce que** la position des fenêtres d'observateur (5, 5') est modifiable et **en ce que** les fenêtres d'observateur (5, 5') peuvent être asservies aux yeux d'un observateur de telle sorte que l'observateur peut continuer à regarder à travers la fenêtre d'observateur (5, 5') même lors d'un mouvement de sa tête.

8. Dispositif selon la revendication 7, **caractérisé en ce qu'**un asservissement des positions des fenêtres d'observateur (5, 5'), qui sont positionnées sur les yeux de l'observateur, est effectué par déplacement mécanique ou électronique de l'au moins une source de lumière (1, 1') avec un moyen d'asservissement.

9. Dispositif selon l'une des revendications 5 à 7, **caractérisé en ce que** l'au moins une source de lumière peut être positionnée par décalage mécanique ou électronique ou par des miroirs mobiles.

10. Dispositif selon l'une des revendications 5 à 9, **caractérisé par** au moins transmetteur de position qui délivre une information servant à la détermination de la position de l'au moins une source de lumière en fonction de la position de l'observateur ou des observateurs.

11. Dispositif selon la revendication 1, **caractérisé en ce que** plusieurs sources de lumière peuvent être mises en circuit pour plusieurs observateurs ou **en ce que** l'afficheur commandable (3) est un afficheur TFT.

12. Dispositif selon la revendication 1, **caractérisé en ce qu'**une reconstruction en couleur est effectuée par au moins trois reconstructions réalisées les unes après les autres dans les couleurs primaires ou **en ce qu'**une reconstruction en couleur d'un hologramme vidéo est effectuée avec un afficheur commandable (3) constitué de cellules matricielles ou distribuées de manière régulière avec au moins trois ouvertures commandables en amplitude et/ou en phase par cellule pour les couleurs primaires, le codage pour les ouvertures s'effectuant séparément pour chaque couleur primaire.

13. Procédé de reconstruction d'une scène tridimensionnelle (6) constituée de points individuels pour faire fonctionner un dispositif, le dispositif contenant au moins une source de lumière (1) suffisamment cohérente réelle de forme ponctuelle ou linéaire et une lentille (2), ainsi qu'un afficheur commandable (3) constitué de cellules matricielles ou distribuées régulièrement d'une autre manière avec au moins une ouverture commandable en amplitude et/ou en phase par cellule, la source de lumière (1), la lentille (2) et l'afficheur commandable (3) étant disposés les uns derrière les autres dans la direction de la lumière, un hologramme vidéo étant codé dans l'afficheur commandable (3) et la lentille (2) générant une image de la source de lumière (1) dans le plan de la transformée inverse de Fourier de l'hologramme vidéo à l'endroit de l'image de la source de lumière, **caractérisé en ce qu'**une fenêtre d'observateur (5) dans le plan d'observateur (4), qui correspond au plan de la transformée inverse de Fourier de l'hologramme vidéo à l'endroit de l'image de la source de lumière, est positionnée à l'intérieur d'un ordre de diffraction de l'hologramme vidéo codé dans l'afficheur commandable (3), **en ce que** la scène tridimensionnelle (6) peut être observée à travers la fenêtre d'observateur (5) lorsqu'un œil d'un observateur est positionné au niveau de la fenêtre d'observateur (5), **en ce qu'**une région de projection (8) est formée au moyen d'une projection vers l'afficheur commandable (3) de fenêtres d'observateur (5) en tant que base à travers un point sélectionné (7) de la scène tridimensionnelle (6), **en ce que** l'hologramme vidéo est codé dans la région de projection (8) de l'afficheur commandable (3) en vue de la représentation du point sélectionné (7) et **en ce que** cette région de projection (8) est l'unique région dans laquelle l'hologramme vidéo est codé pour le point sélectionné (7) .

14. Procédé selon la revendication 13 pour faire fonctionner un dispositif selon l'une des revendications 1 à 12.
